# EUROPÄISCHE PATENTSCHRIFT

(11) **EP 1 036 636 B1**
(45) Veröffentlichungstag und Bekanntmachung des Hinweises auf die Patenterteilung: **13.06.2007**
(21) Anmeldenummer: 00810199.0
(22) Anmeldetag: 09.03.2000
(51) Int. Cl.: B25F 5/02

(54) **Batteriebetriebenes Bohrgerät**
Battery-powered drill
Perceuse alimentée par batterie

(30) Priorität: 15.03.1999 DE 19911362
(43) Veröffentlichungstag der Anmeldung: 20.09.2000
(73) Patentinhaber: HILTI Aktiengesellschaft, 9494 Schaan (LI)
(72) Erfinder: Burger, Helmut, 82272 Moorenweis (DE); Fünfer, Josef, 86343 Königsbrunn (DE)
(74) Vertreter: Wildi, Roland

(56) Entgegenhaltungen:
- EP-A- 0 374 600
- EP-A- 0 726 586
- DE-A- 19 521 423
- US-A- 5 578 391
- PATENT ABSTRACTS OF JAPAN vol. 007, no. 214 (E-199), 21. September 1983 (1983-09-21) & JP 58 106758 A (HITACHI KOKI KK), 25. Juni 1983 (1983-06-25)

## Beschreibung

Die Erfindung betrifft ein batteriebetriebenes Bohrgerät gemäss dem Oberbegriff des Patentanspruchs 1.

Aus der DE-195 21 423 ist ein batteriebetriebenes Bohrgerät mit einem elektrischen Antriebsmotor bekannt, der seine elektrische Antriebsenergie aus einer an dem Gehäuse des Bohrgerätes ansetzbaren Batterie-Baueinheit bezieht, die an dem Gehäuse festlegbar ist. Die Festlegung erfolgt mit einem am Gehäuse angeordneten stiftförmigen Verriegelungsselement, das von der Kraft einer Feder in eine Ausnehmung an der Batterie-Baueinheit gedrückt wird. Mittels eines Schiebers kann das Verriegelungselement aus der Ausnehmung gezogen werden. Die elektrische Verbindung zwischen dem Antriebsmotor und der Batterie-Baueinheit erfolgt über einen an der Batterie-Baueinheit angeordneten Stecker, der beim Ansetzen der Batterie-Baueinheit an dem Gehäuse mit einem an dem Gehäuse angeordneten Gegenstecker in Verbindung bringbar ist.

Damit das stiftförmige Verriegelungselement gut in der Ausnehmung einrasten kann, ist die lichte Weite der Ausnehmung grösser ausgebildet als der Querschnitt des Verriegelungselementes. Das sich dadurch ergebende Spiel zwischen dem Verriegelungselement und der Ausnehmung führt dazu, dass es zwischen dem Gehäuse sowie der am Gehäuse angesetzten Batterie-Baueinheit und somit zwischen dem Stecker und dem Gegenstecker zu Relativbewegungen kommt, wenn auf das Bohrgerät Erschütterungen einwirken. Diese Relativbewegungen zwischen dem Stecker und dem Gegenstecker verursachen eine Beschädigung der Kontakte sowohl des Steckers als auch des Gegenstecker, sodass eine fehlerhafte Kontaktierung die Folge ist.

Nach der US5578391 weist eine batteriegetriebene Handwerkzeugmaschine (üblicherweise mit einem Antriebsmotor) eine an dem Gehäuse ansetzbare und daran festlegbare Batterie-Baueinheit auf, die über mehrere von dieser abragende Stecker in Form von federnd vorgespannten Stiften verfügt, die in Gegenstecker in Form von Buchsen des Gehäuses eingreifend kontaktieren, wobei jeder Stift entgegen der Ansetzrichtung gegen die Kraft einer Feder federnd vorgespannt ist.

Der Erfindung liegt die Aufgabe zugrunde, ein batteriebetriebenes Bohrgerät zu schaffen, bei dem die am Gehäuse des Bohrgerätes angesetzte Batterie-Baueinheit derart fest mit dem Gehäuse verbindbar ist, dass es zu keinen Relativverschiebungen zwischen dem Stecker und dem Gegenstecker kommt, wenn am Bohrgerät Erschütterungen auftreten.

Die Lösung dieser Aufgabe erfolgt durch ein batteriebetriebenes Bohrgerät, welches die im kennzeichnenden Abschnitt des Patentanspruchs 1 angeführten Merkmale aufweist.

Die mit dem Druckstift zusammenwirkende Feder wird beim Ansetzen der Batterie-Baueinheit vorgespannt und gibt in einer Verriegelungsstellung der Batterie-Baueinheit, in der die Batterie-Baueinheit an dem Gehäuse festgelegt ist und der Stecker mit dem Gegenstecker verbunden ist, eine entgegen der Ansetzrichtung gerichtete Kraft auf die Batterie-Baueinheit ab. Dadurch wird ein an dem Batterie-Bauteil angeordnetes, in der Verriegelungsstellung der Batterie-Baueinheit in eine Ausnehmung am Gehäuse ragendes Verriegelungselement gegen eine in Ansetzrichtung weisende Innenkontur dieser Ausnehmung gedrückt. Auf diese Weise wird das Spiel zwischen der Ausnehmung und dem Verriegelungselement aufgehoben, sodass beim Einwirken von Erschütterungen auf das Bohrgerät Relativverschiebungen zwischen dem Stecker der Batterie-Baueinheit und dem Gegenstecker am Gehäuse verhindert werden.

Aus herstelltechnischen Gründen ist zweckmässigerweise der Druckstift an der Batterie-Baueinheit angeordnet und entgegen der Ansetzrichtung gegen die Kraft einer Feder versetzbar. Der Aufnahme und der Führung des Druckstiftes sowie der Feder dient eine an der Batterie-Baueinheit angeordnete Führungsbohrung, die in Ansetzrichtung offen und entgegen der Ansetzrichtung geschlossen ausgebildet ist.

Um ein ungehindertes Einsetzen der Batterie-Baueinheit in ein Ladegerät und ein Verbleiben der Batterie-Baueinheit in der Ladestellung erreichen zu können, ohne dass der Druckstift die Batterie-Baueinheit aus dem Ladeschacht drückt und somit die Kontaktierung unterbricht, wirkt vorteilhafterweise der Druckstift mit einer entgegen der Ansetzrichtung weisenden, in die Batterie-Baueinheit ragbaren, mit dem Gehäuse in Verbindung stehenden Gegenfläche des Gehäuses zusammen.

Aus herstelltechnischen Gründen ist vorzugsweise die Gegenfläche von dem freien Ende eines mit dem Gehäuse in Verbindung stehenden, koaxial zum Druckstift angeordneten Bolzens gebildet, dessen Aussendurchmesser kleiner ist als der Aussendurchmesser des Druckstiftes. Aufgrund der Abmessungen des Aussendurchmessers kann dieser Bolzen in eine dem Druckstift dienende Führungsbohrung an der Batterie-Baueinheit ragen, wenn sich die Batterie-Baueinheit in der zweiten Verriegelungsstellung befindet.

Die Erfindung wird anhand von Zeichnungen, die ein Ausführungsbeispiel wiedergeben, näher erläutert. Es zeigen:
- Fig.1: ein erfindungsgemässes, vereinfacht dargestelltes, batteriebetriebenes Bohrgerät mit einer angesetzen Batterie-Baueinheit;
- Fig. 2: die Batterie-Baueinheit gemäss Schnitt II-II in Fig. 1;
- Fig. 3: ein mit der Batterie-Baueinheit in Verbindung bringbares Teil des Gehäuses gemäss Schnitt III-III in Fig. 1.

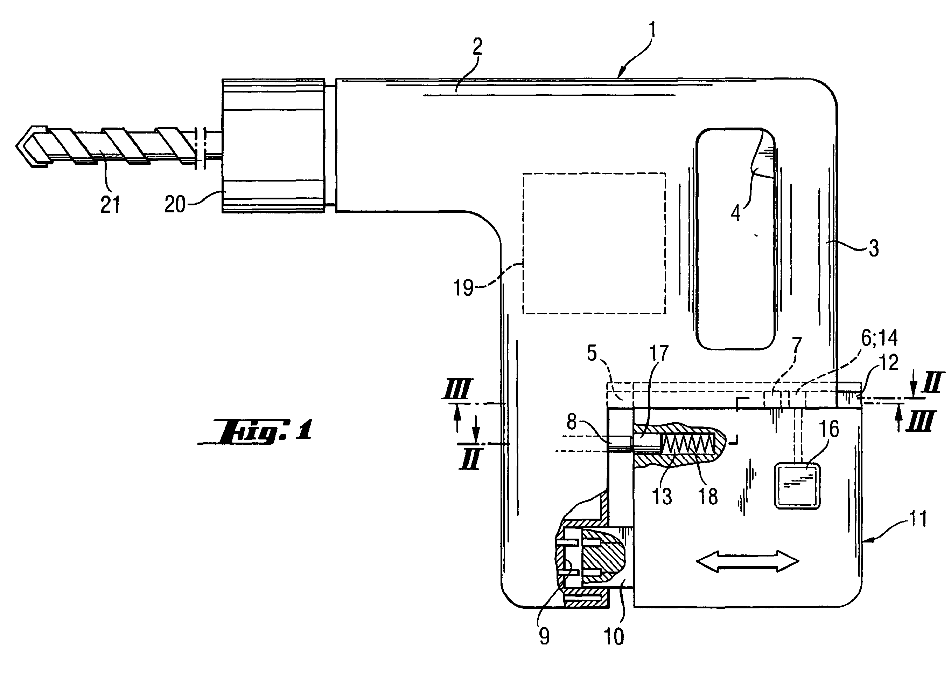

Das in der Fig. 1 dargestellte batteriebetriebene Bohrgerät 1 weist ein Gehäuse 2 mit einem Handgriff 3 auf, an dem sich ein Betätigungsschalter 4 für einen im Gehäuse 2 angeordneten elektrischen Antriebsmotor 19 befindet. Im bohrrichtungsseitigen Endbereich des Gehäuses 2 befindet sich eine Werkzeugaufnahme 20 mit einem Bohrwerkzeug 21. Die Antriebsenergie bezieht der Antriebsmotor 19 von einer an dem Gehäuse 2 ansetzbaren Batterie-Baueinheit 11.

Damit die Batterie-Baueinheit 11 an dem Gehäuse 2 angesetzt werden kann, weist das Gehäuse 2 zwei voneinander beabstandete, parallel zueinander verlaufende und einander zugewandte Führungsleisten 5 und die Batterie-Baueinheit 11 zwei mit den Führungsleisten 5 zusammenwirkbare, voneinander abgewandte Führungsnuten 12 auf.

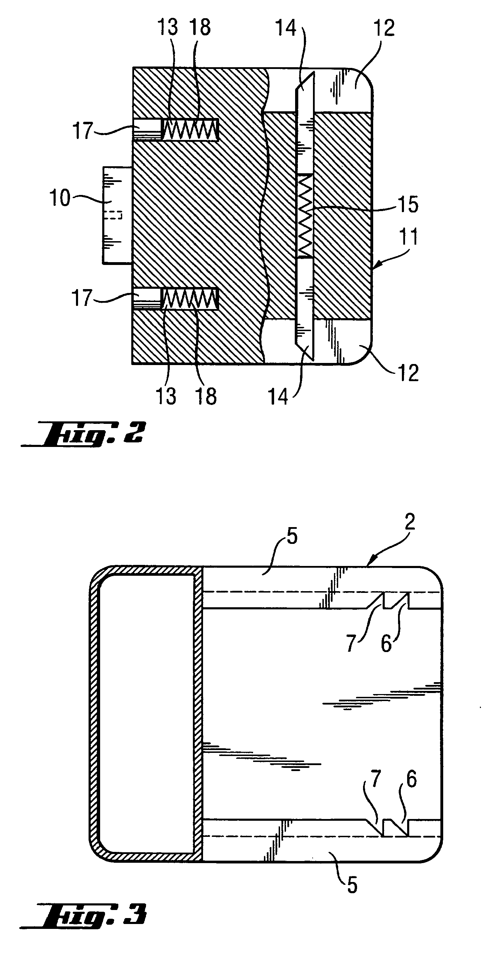

Gemäss Fig. 2 weist die Batterie-Baueinheit 11 im Bereich der Führungsnuten 12 zwei einander gegenüberliegende, koaxial zueinander angeordnete stiftförmige Verriegelungselemente 14 auf, die mit Hilfe einer zwischen den Verriegelungselementen 14 angeordneten Feder 15 in die lichte Weite der Führungsnuten 12 gedrückt werden. Beide Verriegelungselemente 14 stehen mit einer nicht näher dargestellten mechanischen Einrichtung in Verbindung, mit deren Hilfe die Verriegelungselemente 14 aus der lichten Weite der Führungsnuten 12 in das Innere der Batterie-Baueinheit 11 versetzt werden können. Zu dieser mechanischen Einrichtung gehören auch zwei Entriegelungsknöpfe 16, die auf zwei einander gegenüberliegenden Seiten der Batterie-Baueinheit 11 angeordnet sind. Beim Drücken dieser Entriegelungsknöpfe 16 erfolgt eine Versetzung der Verriegelungselemente 14 aus den Führungsnuten 12.

Wie aus der Fig. 3 zu entnehmen ist, weist jede der beiden Führungsleisten 5 des Gehäuses 2 zwei hintereinander angeordnete Ausnehmungen 6, 7 auf. In jeweils eine dieser Ausnehmungen 6, 7 rasten die Verriegelungselemente 14 der Batterie-Baueinheit 11 ein, wenn die Batterie-Baueinheit 11 an dem Gehäuse 2 angesetzt ist und sich in einer ersten oder zweiten Verriegelungsstellung befindet.

In der ersten Verriegelungsstellung der Batterie-Baueinheit ragen die Verriegelungselemente 14 in die Ausnehmungen 6. Ein von der Batterie-Baueinheit abragender Stecker 10 ist in dieser ersten Verriegelungsstellung mit einem Gegenstecker 9 am Gehäuse 2, der mit dem elektrischen Antriebsmotor 19 in Verbindung steht und dessen Aufnahmeöffnung entgegen der der Ansetzrichtung offen ausgebildet ist, elektrisch nicht verbunden.

Beim weiteren Verschieben der Batterie-Baueinheit 11 in Ansetzrichtung ist diese in eine zweite Verriegelungsstellung bringbar, in der die Verriegelungselemente 14 in die Ausnehmungen 7 ragen. In dieser zweiten Verriegelungsstellung ragt der Stecker 10 in den Gegenstecker 9 und ist mit diesem elektrisch verbunden.

Wenigstens in der zweiten Verriegelungsstellung stützt sich ein an der Batterie-Baueinheit 11 angeordneter Druckstift 17 an einer Gegenfläche ab, die von dem freien Ende eines mit dem Gehäuse 2 in Verbindung stehenden, koaxial zum Druckstift 17 angeordneten Bolzens 8 gebildet ist, dessen Aussendurchmesser kleiner ist als der Aussendurchmesser des Druckstiftes 17. Der Druckstift 17 und eine mit dem Druckstift 17 zusammenwirkende Feder 18 sind in einer Führungsbohrung 13 der Batterie-Baueinheit 11 angeordnet. Mit Hilfe des Druckstiftes 17 wird die sich in der zweiten Verriegelungsstellung befindliche Batterie-Baueinheit 11 und somit die an der Batterie-Baueinheit 11 angeordneten Verriegelungs-elemente 14 gegen eine in Ansetzrichtung weisende Innenkontur der zweiten Ausnehmungen 7 gedrückt. Auf diese Weise wird ein Spiel zwischen den Ausnehmungen 7 und den Verriegelungselementen 14 verhindert. Erschütterungen, die auf das Bohrgerät 1 einwirken, oder von dem Bohrgerät 1 selbst hervorgerufen werden können somit keine Relativbewegung zwischen der Batterie-Baueinheit 11 und dem Gehäuse 2 bzw. zwischen dem Stecker 10 und dem Gegenstecker 9 verursachen.

## Patentansprüche

1. Batteriebetriebenes Bohrgerät mit einem Gehäuse (2), einem Handgriff (3) und einem in dem Gehäuse (2) angeordneten elektrischen Antriebsmotor (19), der seine Antriebsenergie aus einer an dem Gehäuse (2) ansetzbaren und daran festlegbaren Batterie-Baueinheit (11) bezieht, die über einen von der Batterie-Baueinheit (11) abragenden Stecker (10) verfügt, der mit einem an dem Gehäuse (2) angeordneten, mit dem Antriebsmotor (19) in Verbindung stehenden Gegenstecker (9) elektrisch verbindbar ist, wobei sich die Batterie-Baueinheit am Gehäuse über einen Druckstift (17) abstützt, der beim Ansetzen der Batterie-Baueinheit gegen die Kraft einer Feder (18) versetzbar ist sowie an der Batterie-Baueinheit (11) angeordnet ist und entgegen der Ansetzrichtung gegen die Kraft der Feder (18) versetzbar ist,
**dadurch gekennzeichnet, dass** der Druckstift (17) mit einer entgegen der Ansetzrichtung weisenden, in die Batterie-Baueinheit (11) ragbaren, mit dem Gehäuse (2) in Verbindung stehenden Gegenfläche des Gehäuses (2) zusammenwirkt.

2. Bohrgerät nach Anspruch 1, **dadurch gekennzeichnet, dass** die Gegenfläche von dem freien Ende eines mit dem Gehäuse (2) in Verbindung stehenden, koaxial zum Druckstift (17) angeordneten Bolzens (8) gebildet ist, dessen Aussendurchmesser kleiner ist als der Aussendurchmesser des Druckstiftes (17).

## Claims

1. Battery-powered drilling device comprising a housing (2), a handle (3) and an electric drive motor (19) arranged in the housing (2), said drive motor drawing its drive energy from a battery module (11) which can be mounted and fastened on the housing (2), said battery module having a plug (10) projecting from the battery module (11), said plug being electrically connectable to a mating plug (9) arranged on the housing (2) and connected to the drive motor (19), wherein the battery module is supported on the housing via a pressure pin (17) which, on mounting of the battery module, is displaceable against the force of a spring (18), and is arranged on the battery module (11) and is displaceable against the mounting direction against the force of the spring (18),
**characterised in that** the pressure pin (17) cooperates with a mating surface of the housing (2) which faces against the mounting direction and can project into the battery module (11) and is linked to the housing (2).

2. Drilling device according to claim 1, **characterised in that** the mating surface is formed by the free end of a bolt (8) linked to the housing (2) and arranged coaxially with the pressure pin (17), the outer diameter of said bolt being smaller than the outer diameter of the pressure pin (17).

## Revendications

1. Perceuse alimentée par batterie, comprenant un carter (2), une poignée (3) et un moteur électrique d'entraînement (19), lequel est disposé dans le carter (2) et reçoit son énergie d'entraînement d'un ensemble de batterie (11) qui peut être monté sur le carter (2) et y être assujetti et qui comporte une fiche (10), laquelle dépasse de l'ensemble de batterie (11) et peut être reliée électriquement à une fiche antagoniste (9) reliée au moteur d'entraînement (19), l'ensemble de batterie prenant appui sur le carter par l'intermédiaire d'une broche de pression (17) qui, lors du montage de l'ensemble de batterie, est déplaçable à l'encontre de la force d'un ressort (18) et qui est disposée sur l'ensemble de batterie (11) et est déplaçable à l'opposé de la direction de montage à l'encontre de la force du ressort (18), **caractérisé en ce que** la broche de pression (17) coopère avec une surface antagoniste du carter (2) qui est tournée à l'opposé de la direction de montage, qui peut pénétrer dans l'ensemble de batterie (11) et qui est reliée au carter (2).

2. Perceuse selon la revendication 1, **caractérisé en ce que** la surface antagoniste est formée par l'extrémité libre d'un goujon (8) qui est relié au carter (2) et disposé coaxialement à la broche de pression (17) et dont le diamètre extérieur est inférieur à celui de la broche de pression (17).
